**Europäisches Patentamt**

(19) **European Patent Office**

**Office européen des brevets**

(11) Numéro de publication: **0 190 983**
**B1**

(12) **FASCICULE DE BREVET EUROPEEN**

(45) Date de publication du fascicule du brevet:
**05.10.88**

(21) Numéro de dépôt: **86440009.8**

(22) Date de dépôt: **04.02.86**

(51) Int. Cl.⁴: **A 01 D 78/10**

(54) Perfectionnement aux jupes flexibles pour déplacer des produits se trouvant sur le sol et machines agricoles équipées de telles jupes.

(30) Priorité: **06.02.85 FR 8501747**

(43) Date de publication de la demande:
**13.08.86 Bulletin 86/33**

(45) Mention de la délivrance du brevet:
**05.10.88 Bulletin 88/40**

(84) Etats contractants désignés:
**AT CH DE GB IT LI NL**

(56) Documents cités:
**FR - A - 2 405 007**
**FR - A - 2 468 293**

(73) Titulaire: **KUHN S.A., 4, Impasse des Fabriques, F-67700 Saverne (FR)**

(72) Inventeur: **Aron, Jérôme, 3, Rue des Comtes de Rosen Dossenheim-sur-Zinsel, F-67330 Bouxwiller (FR)**
Inventeur: **Engel, Alfred, 15, Rue des Noyers Ottersthal, F-67700 Saverne (FR)**

(74) Mandataire: **Andres, Jean-Claude, KUHN S.A. 4, Impasse des Fabriques, F-67700 Saverne (FR)**

## Description

La présente invention concerne des machines agricoles comportant notamment un châssis portant au moins un rotor entraîné en rotation durant le travail, ledit rotor étant muni d'une jupe flexible de forme tronconique qui est destinée à déplacer des produits se trouvant sur le sol. Cette invention se rapporte aux jupes flexibles et aux machines équipées de telles jupes.

Sur des machines connues de ce genre, les jupes se déforment durant le travail sous l'effet de la force centrifuge. Elles ont alors tendance à s'écarter du sol, ce qui entraîne un mauvais ramassage des produits à déplacer et occasionne des pertes.

D'autre part, sur ces machines, la partie extérieure des jupes s'use assez rapidement et même se déchire en raison du frottement sur le sol et par suite de rencontres avec des obstacles tels que des pierres ou des souches pouvant se trouver sur le sol. La qualité du travail alors obtenue avec de telles jupes est évidemment amoindrie, surtout en ce qui concerne la propreté du ramassage. De ce fait, l'utilisateur peut être amené assez rapidement à changer lesdites jupes.

Il a déjà été proposé de rapporter une couronne à la jupe afin de la renforcer (FR-A-2 468 293 et FR-A-2 405 007). Néanmoins, cette couronne nécessite des outillages spéciaux pour sa réalisation et une opération supplémentaire pour sa fixation sur la jupe. Cette couronne peut aussi se détacher de la jupe après une période d'utilisation plus au moins longue selon les conditions de travail. Ceci demande une réparation voire le remplacement de la jupe, ce qui entraîne une perte de temps due à l'immobilisation de la machine, et des frais. De plus, la couronne nuit à la possibilité de la jupe à bien suivre les dénivellations du sol.

La présente invention a notamment pour but de perfectionner les jupes flexibles équipant ces machines en vue de remédier aux inconvénients précités.

A cet effet, une importante caractéristique de l'invention consiste à prévoir près du bord extérieur de chaque jupe flexible une zone dans laquelle son épaisseur est plus importante que dans sa partie intérieure restante, cette zone constituant une partie intégrante de la jupe.

Cette zone agit à la manière d'une ceinture et améliore de ce fait la résistance des jupes flexibles à la déformation due aux effets de la force centrifuge. Ces jupes restent alors constamment en contact avec le sol, ce qui permet d'obtenir un ramassage de bonne qualité.

De plus, cette augmentation d'épaisseur améliore la résistance au frottement et/ou aux chocs provoqués par le sol et les divers obstacles que peuvent rencontrer les jupes durant le travail. On allonge ainsi considérablement la durée d'utilisation de ces jupes.

Le fait que ladite zone constitue une partie intégrante de la jupe, permet de remédier d'une manière peu onéreuse aux inconvénients des machines connues. Ladite zone peut être obtenue directement lors de la réalisation de la jupe. Il n'y a donc pas lieu de rapporter des moyens de rigidification ou de protection qui nécessiteraient des outillages spéciaux pour leur réalisation et une opération supplémentaire pour leur fixation sur la jupe. Ladite intégration exclut aussi le risque qu'une partie de la jupe se détache. On assure ainsi un travail de qualité constante durant toute la durée d'utilisation d'une même jupe.

Le fait que la largeur de la zone dans laquelle l'épaisseur de la jupe est plus importante, est inférieure à la moitié de la largeur totale de la jupe, assure à cette dernière une flexibilité suffisante afin de pouvoir suivre intégralement les dénivellations du sol.

La largeur de cette zone peut avantageusement correspondre à la largeur de la partie de chaque jupe qui est en contact avec le sol durant le travail. Dans ce cas, la partie de la jupe qui a une épaisseur plus faible ne frotte pas sur le sol et n'est donc pas soumise à une importante usure.

D'une manière préférentielle, la zone dans laquelle l'épaisseur est plus importante dépasse la partie restante de la jupe sur le côté de cette dernière qui est dirigé vers le sol. Le raccordement des faces inférieures de ladite zone et de la partie restante de la jupe est assuré au moyen d'une partie inclinée en vue de limiter les possibilités d'accrochage de terre ou de débris.

D'autres caractéristiques et avantages de l'invention ressortiront de la description ci-après, avec référence aux dessins annexés qui représentent, à titre d'exemple non limitatif, une machine de fenaison conforme à l'invention.

Dans ces dessins:

La fig. 1 représente une vue l'ensemble d'une machine selon l'invention;

la fig. 2 représente, à plus grande échelle, une vue de dessous d'une jupe conforme à l'invention;

la fig. 3 représente une coupe d'une jupe et d'une partie d'un rotor.

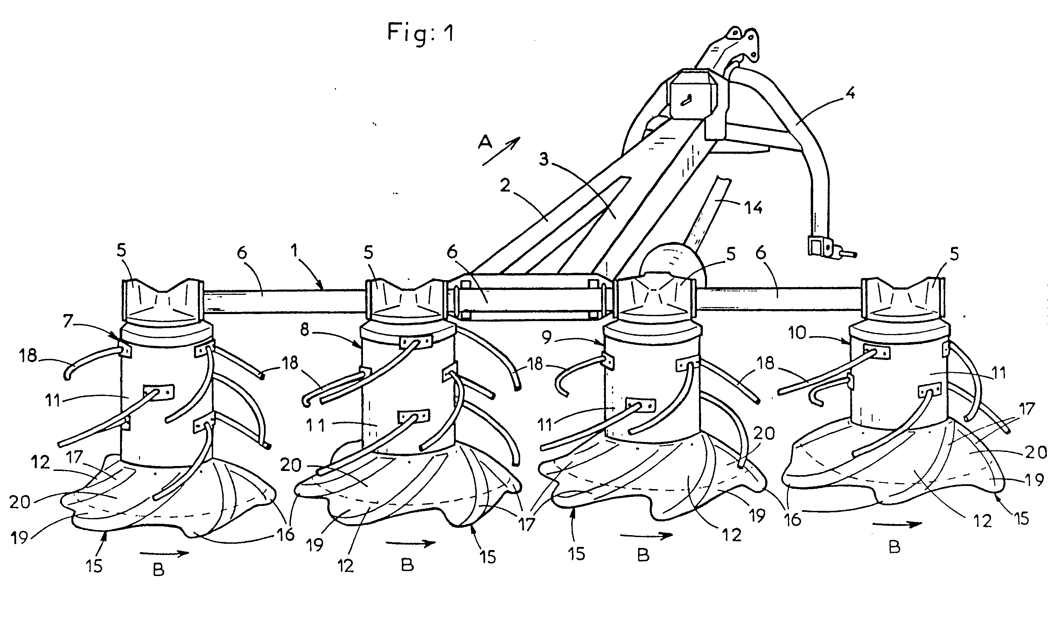

Telle qu'elle est représentée sur la fig. 1, la machine selon l'invention comporte notamment un châssis (1) auquel sont reliées deux poutres (2 et 3) disposées en forme de V. Aux extrémités avant de ces poutres est articulé un chevalet d'attelage trois points (4). Celui-ci permet d'accouplement de la machine à un tracteur d'entraînement non représenté, qui permet de la déplacer durant le travail dans le sens de la flèche (A).

Ledit châssis (1) est constitué par quatre boîtiers (5) reliés entre eux au moyen de tubes (6). Il est muni de quatre rotors (7, 8, 9 et 10) montés libres en rotation sur des supports en forme d'axes non représentés. L'extrémité supérieure de chacun de ces supports est reliée au châssis (1) tandis que leur extrémité inférieure est muni d'un organe d'appui au sol tel qu'une roue, un patin ou un galet. Le nombre de rotor peut évidemment varier sans sortir du cadre de l'invention.

Chacun des rotors (7 à 10) se compose d'une paroi rigide (1) qui forme un cylindre et, d'une jupe flexible (12) de forme tronconique, fixée à partie inférieure de ladite paroi. Ces parois (11) peuvent être réalisées en tôle ou en matière plastique rigide, tandis que les jupes (12) peuvent être en caoutchouc, en matière plastique souple ou une autre matière analogue. Ces jupes (12) sont fixées sur les parois (11) au moyen de rivets (13).

Dans la position représentée sur la fig. 1, le châssis support (1) est disposé obliquement par rapport à la direction d'avancement (A). Cette disposition favorise la transmission des produits à déplacer d'un rotor à l'autre en vue de la réalisation d'un andain sur le côté du rotor (7) situé à l'extrémité la plus en arrière. Durant ce travail d'andainage, les quatre rotors (7 à 10) sont entraînés en rotation dans le même sens (flèches B). Ils peuvent alors être sensiblement verticaux ou légèrement inclinés vers l'avant, dans la direction du sens d'avancement (A) de la machine.

Ledit entraînement en rotation des rotors (7 à 10) est assuré d'une manière connue en soi au moyen d'un arbre logé dans le châssis. Pour cela cet arbre comporte dans chaque boîtier (5) un pignon conique qui coopère avec une couronne dentée solidaire du rotor (7, 8, 9 ou 10) correspondant. Ledit arbre est lui-même entraîné d'une manière connue en soi, à partir de l'arbre de prise de force du tracteur d'entraînement, au moyen d'un arbre à cardan (14).

Durant le travail, les jupes (12) plongent sous les produits, par exemple du fourrage étalé sur le sol, suivent intégralement toutes les dénivellations du sol et déplacent ces produits sur leur face supérieure. Leur bord extérieur (15) présente des protubérances (16) facilitant la préhension des produits. Cette préhension est également facilitée par l'inclinaison vers l'avant des rotors (7 à 10). Cette inclinaison permet d'avoir un meilleur contact des jupes (12) avec le sol dans la partie avant de leur trajectoire. En sus, la face supérieure de chaque jupe (12) est munie de nervures (17) pour favoriser l'entraînement des produits.

Lors de l'andainage de fourrage, celui-ci est ramassé par ces jupes (12). Il est ensuite transmis d'un rotor à l'autre et est déposé latéralement à la machine sous la forme d'un andain. Ladite transmission est améliorée à l'aide d'entraîneurs (18) fixés sur les parois (11) des rotors (7 à 10). Ces entraîneurs (18) empêchent également le passage de fourrage entre les différents rotors (7 à 10).

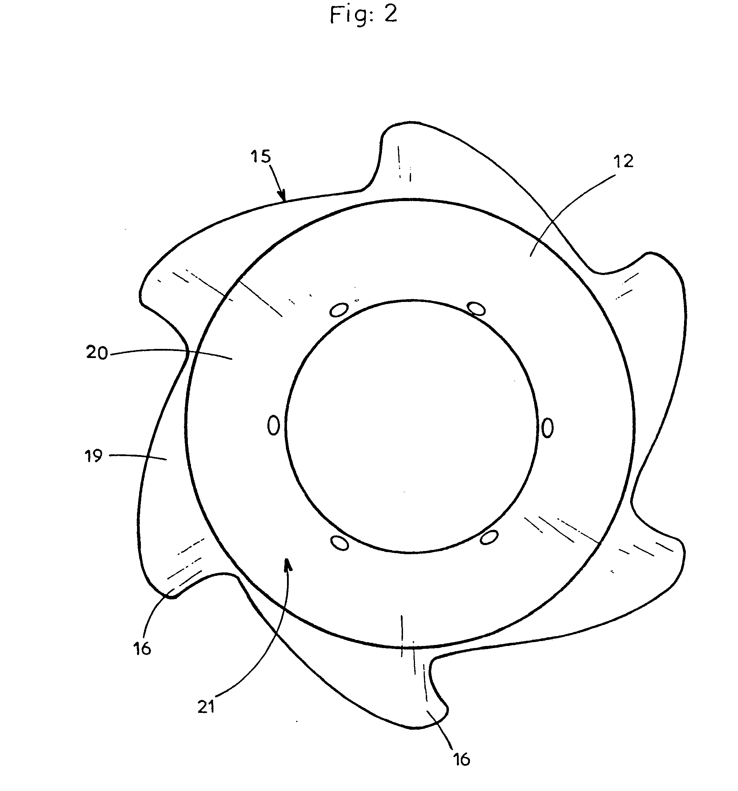

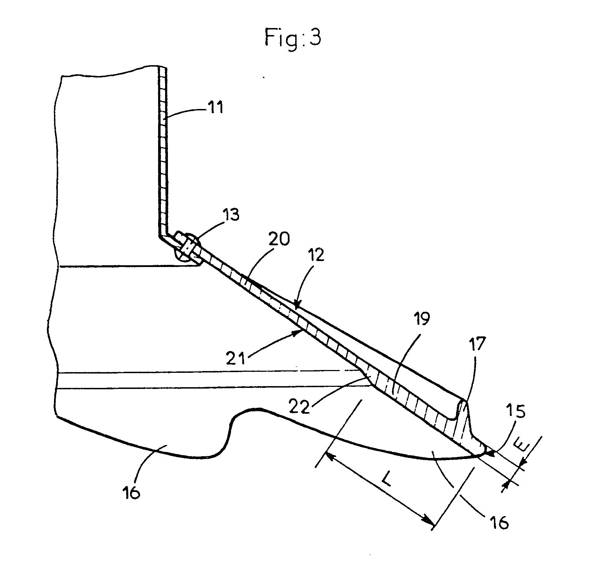

Chaque jupe flexible (12) comporte près de son bord extérieur (15) une zone (19) dans laquelle son épaisseur est plus importante que dans sa partie intérieure restante (20). Cette zone (19) constitue une partie intégrante de la jupe flexible (12) et s'étend sans interruption sur tout le pourtour de cette jupe (12) (voir fig. 2 et 3).

Cette dernière caractéristique permet notamment de limiter les déformations de la jupe (12) sous l'effet de la force centrifuge résultant de leur rotation. De plus, elle renforce la jupe (12) et supprime pratiquement le risque de déchirement de cette dernière entre ses protubérances (16).

L'épaisseur (E) de la jupe (12) dans cette zone (19) est sensiblement le double de son épaisseur dans sa partie intérieure (20). Cette épaisseur (E) se situe avantageusement entre 5 et 15 millimètres.

Cette zone (19) peut être obtenue lors de la réalisation de la jupe (12) elle-même. Pour cela il suffit de prévoir une empreinte correspondant à la forme de ladite zone dans le moule qui sert à la réalisation de la jupe (12).

La largeur (L) de la zone (19) est inférieure à la moitié de la largeur totale de la jupe flexible (12). Cette dernière conserve ainsi une bonne flexibilité de manière à pouvoir suivre les irrégularités du sol. De bons résultats ont été obtenus avec des jupes (12) ayant des zones (19) de largeur (L) comprise entre 1/5ème et 2/5ème de leur largeur totale.

Cette zone (19) constitue avantageusement la partie de la jupe (12) qui est en contact avec le sol durant le travail. A cet effet, elle s'étend jusqu'au bord extérieur (15) de ladite jupe. Ainsi, seule cette zone (19) est soumise aux frottements sur le sol et aux chocs. La jupe (12) selon cette invention a donc une durée d'utilisation nettement supérieure à celle des jupes actuellement connues.

Comme cela ressort notamment de la fig. 3, la zone (19) dépasse la partie intérieure restante (20) de la jupe (12) sur le côté inférieur (21). Cette caractéristique permet de protéger le côté de la jupe (12) qui est dirigé vers le sol. De plus, sa face supérieure reste dégagée, ce qui favorise le glissement du fourrage.

Le raccordement de la face inférieure de cette zone (19) avec la face inférieure de la partie restante (20) de la jupe (12), et réalisé au moyen d'une partie inclinée (22) (fig. 3). Ainsi, le dessous de la jupe (12) ne présente pas d'arrête vive, à laquelle pourraient s'accrocher de la terre ou des débris de fourrage.

**Revendications**

1. Machine agricole comportant notamment un châssis (1) portant au moins un rotor (7–10) avec une jupe flexible (12) de forme tronconique qui est destinée à déplacer des produits se trouvant sur le sol, laquelle jupe présente près de son bord extérieur une zone (19) dans laquelle son épaisseur est plus importante que dans sa partie intérieure restante, cette zone s'étendant sans interruption sur tout le pourtour de la jupe flexible et ayant sa largeur (L) inférieure à la moitié de la largeur totale de la jupe flexible (12), caractérisée par le fait que ladite zone (19) constitue une partie intégrante de la jupe flexible (12).

2. Machine selon la revendication 1, caractérisée par le fait que l'épaisseur (E) de la jupe (12) dans la zone (19) est sensiblement le double de son épaisseur dans sa partie intérieure (20).

3. Machine selon l'une quelconque des revendications précédentes, caractérisée par le fait que la zone (19) constitue la partie de la jupe (12) qui est en contact avec le sol durant le travail.

4. Machine selon la revendication 3, caractérisée par le fait que la zone (19) s'étend jusqu'au bord extérieur (15) de la jupe (12).

5. Machine selon l'une quelconque des revendications précédentes, caractérisée par le fait que la zone (19) dépasse la partie intérieure (20) de la jupe (12) sur le côté inférieur (21) de cette dernière.

6. Machine selon l'une quelconque des revendications précédentes, caractérisée par le fait que la zone (19) est raccordée à la partie intérieure (20) de la jupe (12) au moyen d'une partie inclinée (22).

7. Jupe flexible de forme tronconique pour machines agricoles, laquelle jupe est destinée à déplacer des produits se trouvant sur le sol et présente près de son bord extérieur une zone (19) dans laquelle son épaisseur est plus importante que dans sa partie intérieure restante, cette zone s'étendant sans interruption sur tout son pourtour, et ayant sa largeur (L) inférieure à la moitié de la largeur totale de la jupe flexible, caractérisée par le fait que ladite zone (19) constitue une partie intégrante de la jupe.

8. Jupe selon la revendication 7, caractérisée par le fait que son épaisseur (E) dans la zone (19) est sensiblement le double de son épaisseur dans sa partie intérieure (20).

9. Jupe selon l'une quelconque des revendications 7 et 8, caractérisée par le fait que la zone (19) constitue la partie qui est en contact avec le sol durant le travail.

10. Jupe selon la revendication 9, caractérisée par le fait que la zone (19) s'étend jusqu'au bord extérieur (15) de la jupe (12).

11. Jupe selon l'une quelconque des revendications 7 à 10, caractérisée par le fait que la zone (19) dépasse sa partie intérieure (20) sur son côté inférieur (21).

12. Jupe selon l'une quelconque des revendications 7 à 11, caractérisée par le fait que la zone (19) est raccordée à la partie intérieure (20) au moyen d'une partie inclinée (22).

**Patentansprüche**

1. Landmaschine mit insbesondere einem Tragrahmen (1) mit wenigstens einem Rotor (7–10) mit einem flexiblen kegelstumpfförmigen Kragen (12), der dazu bestimmt ist, sich auf dem Boden befindliche Produkte zu versetzen, welcher Kragen in der Nähe seines äusseren Randes einen Bereich (19) aufweist, in welchem seine Dicke grösser ist als in seinem übrigen inneren Teil, wobei sich dieser Bereich ununterbrochen über den ganzen Umfang des flexiblen Kragens erstreckt und wobei seine Breite (L) kleiner als die Hälfte der Gesamtbreite des flexiblen Kragens (12) ist, dadurch gekennzeichnet, dass der Bereich (19) einen Bestandteil des flexiblen Kragens (12) bildet.

2. Maschine nach Anspruch 1, dadurch gekennzeichnet, dass die Dicke (E) des Kragens (12) in dem Bereich (19) etwa doppelt so dick ist als seine Dicke in seinem inneren Teil (20).

3. Maschine nach irgendeinem der vorhergehenden Ansprüche, dadurch gekennzeichnet, dass der Bereich (19) den Teil des Ringkragens (12), welcher während der Arbeit den Boden berührt, bildet.

4. Maschine nach Anspruch 3, dadurch gekennzeichnet, dass der Bereich (19) sich bis zum äusseren Rand (15) des Kragens (12) erstreckt.

5. Maschine nach irgendeinem der vorhergehenden Ansprüche, dadurch gekennzeichnet, dass der Bereich (19) auf der unteren Seite (21) des Kragens (12) dessen inneren Teil (20) überragt.

6. Maschine nach irgendeinem der vorhergehenden Ansprüche, dadurch gekennzeichnet, dass der Bereich (19) mittels eines schrägen Teils (22) mit dem inneren Teil (20) des Kragens (12) verbunden ist.

7. Flexibler kegelstumpfförmiger Kragen für Landmaschinen, welcher Kragen dazu bestimmt ist, sich auf dem Boden befindliche Produkte zu versetzen und welcher in der Nähe seines äusseren Randes einen Bereich (19) aufweist, in dem seine Dicke grösser ist als in seinem übrigen unteren Teil, wobei sich dieser Bereich ununterbrochen über den ganzen Umfang des Kragens erstreckt und wobei seine Breite (L) kleiner ist als die Hälfte der Gesamtbreite des flexiblen Ringkragens, dadurch gekennzeichnet, dass der Bereich (19) einen Bestandteil des Kragens bildet.

8. Kragen nach Anspruch 7, dadurch gekennzeichnet, dass seine Dicke (E) in dem Bereich (19) etwa doppelt so gross ist als die Dicke in seinem inneren Teil (20).

9. Kragen nach irgendeinem der Ansprüche 7 und 8, dadurch gekennzeichnet, dass der Bereich (19) den Teil, der während der Arbeit den Boden berührt, bildet.

10. Kragen nach Anspruch 9, dadurch gekennzeichnet, dass der Bereich (19) sich bis zum äusseren Rand (15) des Kragens (12) erstreckt.

11. Kragen nach irgendeinem der Ansprüche 7 bis 10, dadurch gekennzeichnet, dass der Bereich (19) seinen inneren Teil (20) auf seiner unteren Seite (21) überragt.

12. Kragen nach irgendeinem der Ansprüche 7 bis 11, dadurch gekennzeichnet, dass der Bereich (19) mittels eines schrägen Teils (22) mit dem inneren Teil (20) verbunden ist.

**Claims**

1. An agricultural machine, particularly including a chassis (1) carrying at least one rotor (7 to 10) with a flexible skirt (12) having a frusto-conical shape which is adapted to shift products lying on the ground, which skirt has, near to its outer edge, a zone (19) in which its thickness is greater than in the remaining, inner, portion thereof, this zone extending without interruption over the whole of the periphery of the flexible skirt and having its radial width (L) less than the half of the total radial width of the flexible skirt (12), characterised by the fact that the said zone (19) is an integral part of the flexible skirt (12).

2. A machine according to claim 1, characterised by the fact that the thickness (E) of the skirt (12) in the zone (19) is substantially twice the thickness of the inner portion (20) thereof.

3. A machine according to either one of the preceding claims, characterised by the fact that the zone (19) constitutes the portion of the skirt (12) which is in contact with the ground in operation.

4. A machine according to claim 3, characterised by the fact that the zone (19) extends to the outer edge (15) of the skirt (12).

5. A machine according to any one of the preceding claims, characterised by the fact that the zone (19) projects with respect to the inner portion (20) of the skirt (12) on the lower side (21) of the latter.

6. A machine according to any one of the preceding claims, characterised by the fact that the zone (19) is joined to the inner portion (20) of the skirt (12) by means of an inclined portion (22).

7. A flexible skirt of frusto-conical shape for agricultural machines, which skirt is adapted to shift products lying on the ground, said skirt having, near to its outer edge, a zone (19) in which its thickness is greater than in the remaining, inner, portion thereof, the said zone extending without interruption over the whole periphery of the zone and having its radial width (L) less than the half of the total radial width of the flexible skirt, characterised by the fact that the said zone (19) is an integral part of the skirt.

8. A skirt according to claim 7, characterised by the fact that its thickness (E) in the zone (19) is substantially twice the thickness of the inner portion (20) thereof.

9. A skirt according to either one of claims 7 and 8, characterised by the fact that the zone (19) constitutes the portion of the skirt which is in contact with the ground in operation.

10. A skirt according to claim 9, characterised by the fact that the zone (19) extends to the outer edge (15) of the skirt (12).

11. A skirt according to any one of claims 7 to 10, characterised by the fact that the zone (19) projects with respect to the inner portion (20) on its lower side (21).

12. A skirt according to any one of claims 7 to 11, characterised by the fact that the zone (19) is joined to the inner portion (20) by means of an inclined portion (22).

Fig: 1

Fig: 2

Fig:3